# EUROPÄISCHE PATENTSCHRIFT

(11) **EP 1 041 363 B1**
(45) Veröffentlichungstag und Bekanntmachung des Hinweises auf die Patenterteilung: **07.06.2006**
(21) Anmeldenummer: 00105635.7
(22) Anmeldetag: 16.03.2000
(51) Int. Cl.: G01D 5/347

(54) **Verfahren und Vorrichtung zum Anbringen eines Massstabes**
Procedure and device to mount a measuring scale on a substrate
Procédé et dispositif pour joindre une échelle de mesure sur un substrat

(30) Priorität: 29.03.1999 DE 19914311
(43) Veröffentlichungstag der Anmeldung: 04.10.2000
(73) Patentinhaber: Dr. Johannes Heidenhain GmbH, 83292 Traunreut (DE)
(72) Erfinder: Nelle, Günther, Dr., 83346 Bergen (DE)

(56) Entgegenhaltungen:
- DE-A- 19 700 367
- US-A- 4 569 137
- PATENT ABSTRACTS OF JAPAN vol. 015, no. 205 (P-1206), 27. Mai 1991 (1991-05-27) -& JP 03 053109 A (SONY MAGNESCALE INC), 7. März 1991 (1991-03-07)

## Beschreibung

Die Erfindung betrifft ein Verfahren zum Anbringen eines Maßstabes oder Maßstabträgers gemäß dem Oberbegriff des Anspruches 1 sowie eine dazu ausgebildete Vorrichtung gemäß dem Oberbegriff des Anspruches 6.

Zur Positionsmessung an Werkzeugmaschinen oder Koordinatenmeßmaschinen werden oft sehr lange Maßstäbe benötigt. Diese Maßstäbe müssen parallel zur Meßrichtung ausgerichtet befestigt werden, wobei die Meßrichtung durch die Führung der Werkzeug- oder Meßmaschine vorgegeben ist.

Es wurden schon verschiedene Maßnahmen zum Anbringen von Maßstäben vorgeschlagen. Gemäß der EP 0 388 453 B1 wird ein selbstklebender Bandmaßstab mittels eines Applikators zum Führungsablauf eines Schlittens einer Werkzeug- oder Meßmaschine ausgerichtet aufgeklebt. Diese Art der Befestigung liefert eine gute Zuordnung des Maßbandes zum Abtastkopf, sie ist jedoch nur für hochelastische Maßstäbe in Bandform einsetzbar.

In der DE 197 00 367 A1 ist eine Maßnahme beschrieben, nach der zur Ausrichtung eines Maßbandes seitliche Anlegeelemente entlang der Maßbandlänge befestigt werden, gegen die das Maßband angelegt wird.

Eine ebenfalls weit verbreitete Befestigungsart für dünne Maßbänder besteht darin, daß das Maßband in seiner Längserstreckung in eine Nut aufgenommen wird. Diese ist in der Firmenschrift "NC Längenmeßsysteme" der Firma Dr. Johannes Heidenhain GmbH vom September 1998, Seiten 58 und 59 beschrieben. Dabei werden Aufnahmeprofile aus stranggepreßtem Aluminium mit einem doppelseitig klebenden Klebeband an einer Befestigungsfläche befestigt und danach das Maßband in die Aufnahmenut des Profils eingeschoben. Auch hier besteht das Problem, das Aufnahmeprofil exakt parallel zur Meßrichtung verlaufend auszurichten.

Bei der klebenden Befestigung eines Maßstabes oder eines Maßstabträgers besteht generell das Problem, daß die Haltekraft des Klebstoffes so groß ist, daß eine Ausrichtung nach dem in Kontakt bringen der zu verbindenden Flächen nicht mehr möglich ist. Die bisher bekannten Maßnahmen zum Ausrichten eignen sich besonders für flexible Maßbänder. Relativ eigenstabile Maßstäbe sowie Maßstabträger - insbesondere Aufnahmeprofile - können mit den bekannten Maßnahmen nur schwer ausgerichtet befestigt werden.

Der Erfindung liegt daher die Aufgabe zugrunde, ein Verfahren und eine Vorrichtung anzugeben, mit dem/der auch relativ eigenstabile Maßstäbe oder Maßbandträger auf einfache Weise ausgerichtet an einem Körper aufgeklebt werden können.

Diese Aufgabe wird durch die Merkmale des Anspruches 1 sowie des Anspruches 6 gelöst.

Vorteilhafte Ausbildungen der Erfindung sind in den abhängigen Ansprüchen angegeben.

Die Erfindung wird nachfolgend anhand der Zeichnungen näher erläutert. Es zeigt
- Figur 1: eine Prinzipdarstellung einer Koordinatenmeßmaschine mit einem ausgerichteten Maßstabträger in Längsansicht,
- Figur 2: die Anordnung gemäß Figur 1 im Querschnitt II-II,
- Figur 3: einen Montagezustand des Maßstabträgers in Längsansicht,
- Figur 4: einen vergrößert dargestellten Querschnitt IV-IV aus Figur 3,
- Figur 5: eine erste Möglichkeit zur Ausrichtung des Maßstabträgers,
- Figur 6: eine zweite Möglichkeit zur Ausrichtung des Maßstabträgers,
- Figur 7: eine dritte Möglichkeit zur Ausrichtung des Maßstabträgers,
- Figur 8: einen Montagezustand des Maßstabträgers in Längsansicht und
- Figur 9: den Maßstabträger gemäß Figur 8 vergrößert im Querschnitt IX-IX.

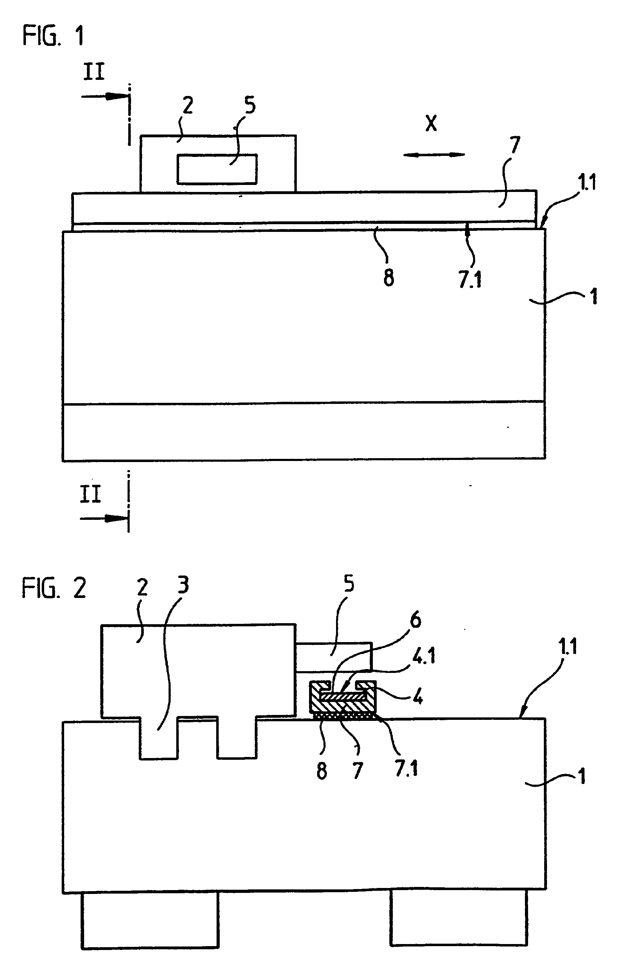

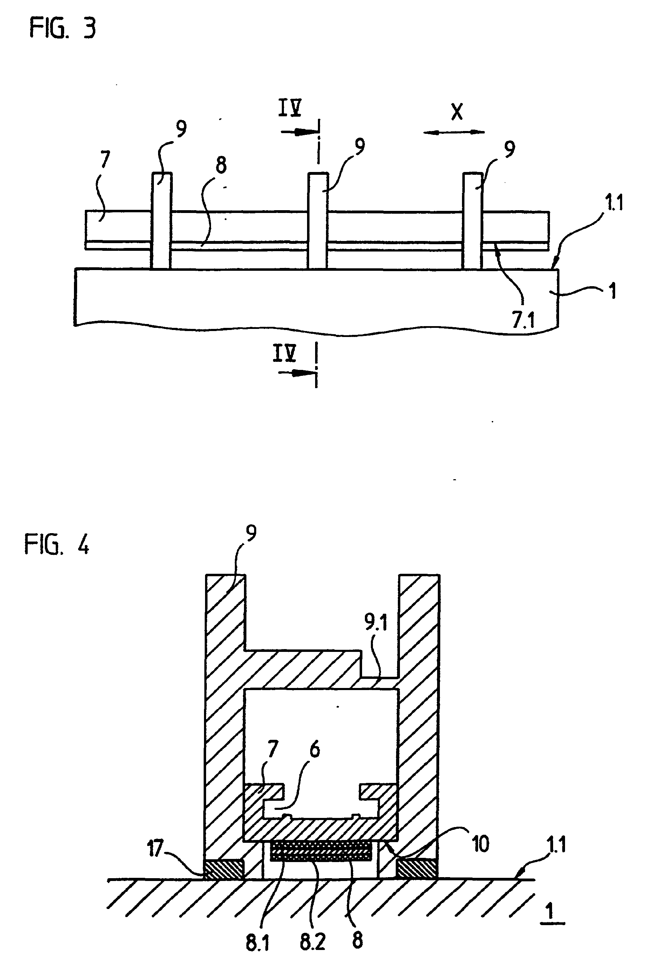

In den Figuren 1 und 2 ist eine Koordinatenmeßmaschine mit einem Maschinenbett 1 und einem Schlitten 2 dargestellt. Der Schlitten 2 ist in Längsrichtung X entlang einer Linearführung 3 verschiebbar. Zur Erfassung der Position des Schlittens 2 relativ zum Bett 1 wird eine Längenmeßeinrichtung, bestehend aus einem Maßstab 4 und einem Abtastkopf 5 verwendet. Im dargestellten Beispiel ist der Maßstab 4 ein Metallband, das in einer Nut 6 eines Maßstabträgers 7 formschlüssig befestigt ist. Der Maßstabträger 7 ist auf seiner Unterseite 7.1 mit einer doppelseitig klebenden Klebefolie 8 versehen. Die Klebefolie 8 mit den Klebeschichten 8.1 und 8.2 ist in Figur 4 vergrößert dargestellt.

Damit bei der Bewegung des Schlittens 2 relativ zum Bett 1 der Abtastkopf 5 kontinuierlich die Teilung 4.1 des Maßstabes 4 berührungslos abtasten kann, muß der Maßstabträger 7 parallel zur Verfahrrichtung X des Abtastkopfes 5 und somit des Schlittens 2 ausgerichtet befestigt sein. Diese Ausrichtung kann nur in einem Zustand erfolgen, bei dem die Haltekraft des Klebstoffes 8.2 zwischen dem Maßstabträger 7 und der Anbaufläche 1.1 des Bettes 1 noch nicht wirksam ist, also der Klebstoff 8.2 mit dieser Fläche 1.1 noch keinen Kontakt hat. Um in diesem Zustand den Maßstabträger 7 trotzdem einfach ausrichten zu können, wird dieser mittels Abstandhalter 9 auf die Anbaufläche 1.1 aufgelegt. Die Abstandhalter 9 haben die Funktion, den Maßstabträger 7 parallel in Abstand zur Anbaufläche 1.1 zu halten um ihn auf der Anbaufläche 1.1 leicht definiert verschieben und somit ausrichten zu können.

In den Figuren 3 und 4 ist ein erster Montagezustand des Maßstabträgers 7 dargestellt. Der relativ eigenstabile Maßstabträger 7 wird an mehreren in Meßrichtung X voneinander beabstandeten Stellen durch die Abstandhalter 9 in Abstand zur Anbaufläche 1.1 gehalten. Die Klebeschicht 8.2 der am Maßstabträger 7 aufgebrachten Klebefolie 8 berührt an keiner Stelle die Anbaufläche 1.1. Die Abstandhalter 9 sind nämlich so gestaltet, daß sie den Maßstabträger 7 seitlich umgreifen, so daß er quer zur Meßrichtung X spielfrei und in geringem Abstand zur Anbaufläche 1.1 gehalten wird. Über die Gesamtlänge des Maßstabträgers 7 werden die Abstandhalter 9 so verteilt, daß die Durchbiegung zwischen zwei Abstandhaltern 9 so gering bleibt, daß die Klebeschicht 8.2 die Anbaufläche 1.1 nicht berührt.

Um den Maßstabträger 7 in einem Abstand zur Anbaufläche 1.1 zu halten, kann der Abstandhalter 9 den Maßstabträger 7 nur klemmend halten oder, wie in Figur 4 dargestellt, kann alternativ oder zusätzlich eine Auflage 10 am Abstandhalter 9 vorgesehen sein, auf der der Maßstabträger 7 mit einem von Klebstoff freien Bereich seiner Unterseite 7.1 aufliegt. Der in Figur 4 dargestellte Abstandhalter 9 ist H-förmig ausgebildet. Die Innenflächen der beiden Schenkel bilden eine Passung zur spielfreien Halterung der Seitenflächen des Maßstabträgers 7. Bei besonders langen Maßstabträgern 7 ist es vorteilhaft, wenn zumindest einer der Schenkel des Abstandhalters 9 quer zur Meßrichtung X federnd schwenkbar ausgebildet ist. Gemäß Figur 4 ist der rechte Schenkel über ein Gelenk 9.1 schwenkbar, so daß dieser Schenkel des Abstandhalters 9 zur einfachen Aufnahme des Maßstabträgers 7 aufgespreizt werden kann.

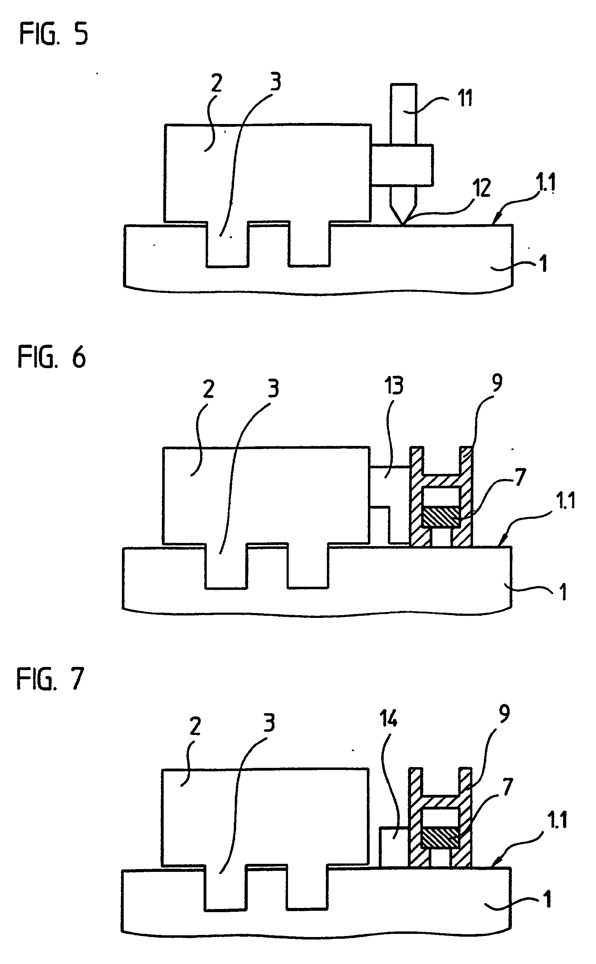

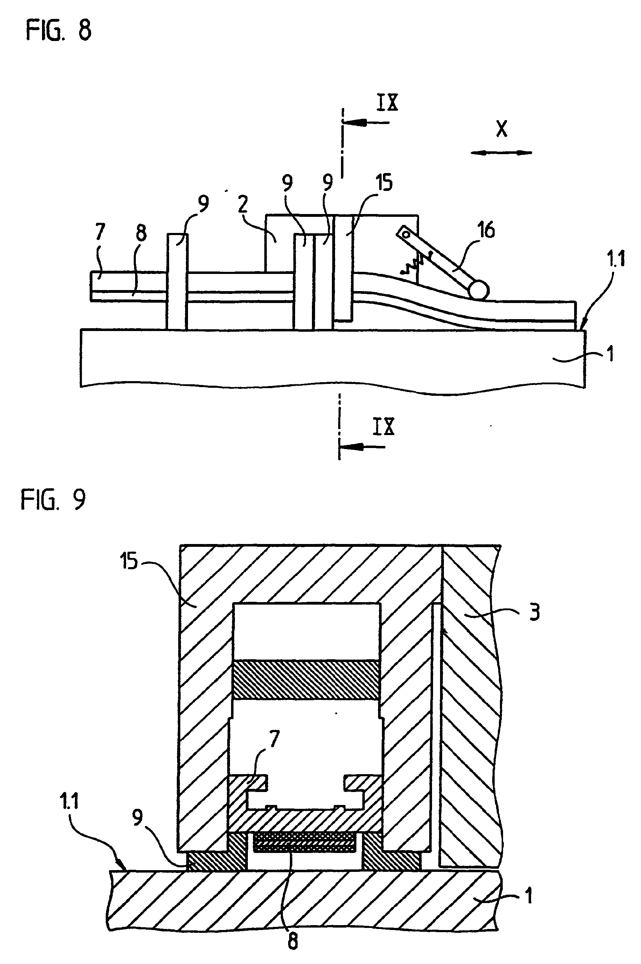

Damit der Maßstabträger 7 mit den Abstandhaltern 9 einfach parallel zur Verfahrrichtung X des Abtastkopfes 5 ausgerichtet werden kann, können folgende Maßnahmen hilfreich sein:
Gemäß Figur 5 wird an den Maschinenschlitten 2 - bevorzugt anstelle des Abtastkopfes 5 - oder an den Abtastkopf 5 selbst ein Markierungsstift 11 oder eine Reißnadel so angebracht, daß die Spitze die richtige Randlage des Maßstabträgers 7 oder der Abstandhalter 9 kennzeichnet. Durch Bewegen des Maschinenschlittens 2 entlang der Führung 3 wird eine zur Meßrichtung X parallele Linie 12 an der Anbaufläche 1.1 markiert. An dieser Linie 12 wird der Maßstabträger 7 oder werden die Abstandhalter 9 mit dem daran gehaltenen Maßstabträger 7 ausgerichtet und nach Entfernen der Abstandhalter 9 festgeklebt. Das Entfernen der Abstandhalter 9 geschieht vorteilhaft durch Verschieben dieser zum Ende des Maßstabträgers 7 hin. Dabei wird der Maßstabträger 7 hinter den verschobenen und somit entfernten Abstandhaltern 9 durch die Gewichtskraft, durch mechanisches Andrücken oder durch Magnetkraft an die Anbaufläche 1.1 gedrängt, so daß die Haltekraft des Klebstoffes 8.2 zur Wirkung kommt.
Gemäß Figur 6 wird an den Maschinenschlitten 2 - bevorzugt anstelle des Abtastkopfes 5 - oder an den Abtastkopf 5 selbst ein Anschlagstück 13 befestigt, das die korrekte Lage der Seitenfläche des Maßstabträgers 7 senkrecht zur Meßrichtung X festlegt. Der Schlitten 2 wird mit dem Anschlagstück 13 entlang des Maßstabträgers 7 in Meßrichtung X bewegt und der Maßstabträger 7 oder die Abstandhalter 9 an das Anschlagstück 13 angeschlagen. Der Maßstabträger 7 kann dabei partiell zuerst an einer Stelle ausgerichtet werden und an dieser Stelle der Abstandhalter 9 entfernt sowie der Maßstabträger 7 mit seiner Klebeschicht 8.2 auch partiell bereits an die Anbaufläche 1.1 gedrückt werden. In diesem Zustand ist der Maßstabträger 7 noch um diese bereits geklebte Stelle schwenkbar, so daß die Ausrichtung und Verklebung in gleicher Weise an einer davon in Meßrichtung X beabstandeten Stelle einfach nach Verschieben des Anschlagstückes 13 erfolgen kann.
Gemäß Figur 7 wird an der Anbaufläche 1.1 zuerst eine Leiste 14 als Anschlag befestigt. Der Maßstabträger 7 oder die Abstandhalter 9 werden an dieser Leiste 14 angeschlagen. Durch Verschieben der Abstandhalter 9 gegenüber dem Maßstabträger 7 in Meßrichtung X entlang der Leiste 14 wird der Maßstabträger 7 ausgerichtet und durch die Schwerkraft, Andrückkraft oder Magnetkraft wird der Maßstabträger 7 an den nicht mehr unterstützten Bereichen mit der Anbaufläche 1.1 im ausgerichteten Zustand in Kontakt kommen und daran festgeklebt. Die Leiste 14 kann auch durch voneinander beabstandete Anschlagelemente ersetzt werden. Die Leiste 14 bzw. die Anschlagelemente können auch nach dem in der DE 197 00 367 A1 beschriebenen Verfahren aufgebracht werden, wobei die Anschlagelemente dann vorzugsweise auf die Anbaufläche 1.1 aufgeklebte Bänder sind.
Gemäß Figur 8 und 9 wird an den Maschinenschlitten 2 - bevorzugt anstelle des Abtastkopfes - oder an den Abtastkopf 5 selbst ein Justierelement 15 befestigt, das den Maßstabträger 7 spielfrei an den Seitenkanten umgreift. Der Maßstabträger 7 wird mittels der Abstandhalter 9 auf die Anbaufläche 1.1 aufgelegt, das gabelförmige Justierelement 15 an einer Stelle mit dem Maßstabträger 7 in Eingriff gebracht und durch Verschieben des Schlittens 2 gegenüber dem Maßstabträger 7 werden mit dem Justierelement 15 die Abstandhalter 9 kontinuierlich in Meßrichtung X verschoben und der Maßstabträger 7 fällt hinter dem Justierelement 15 ausgerichtet auf die Anbaufläche 1.1 oder wird an die Anbaufläche 1.1 gedrückt. Hierzu kann am Schlitten 2 ein Andrückelement 16 befestigt sein, das beispielsweise den Maßstabträger 7 mit seiner Klebefläche 8.2 angefedert an die Anbaufläche 1.1 drängt. In den Abstandhaltern 9 sowie dem Justierelement 15 wird der Maßstabträger 7 seitlich spielfrei geführt ausgerichtet.

Die Abstandhalter 9 können Magnete 17 enthalten, um auf magnetischen Montageflächen 1.1 verschiebbar zu haften (Figur 4), oder sie können Anschlußmöglichkeiten für Vakuumschläuche enthalten, um mittels Vakuum an der Montagefläche 1.1 verschiebbar zu haften. Durch diese Möglichkeiten kann der Maßstabträger 7 auch an senkrechten Anbauflächen oder hängend ausgerichtet werden.

Weiterhin kann der Maßstabträger 7 auch magnetisch oder über Vakuum an den Abstandhaltern 9 gehalten werden, wobei dann im ausgerichteten Zustand die Magnetkraft bzw. das Vakuum gezielt verringert wird, um die Kopplung von Abstandhalter 9 und Maßstabträger 7 aufzuheben und den Maßstabträger 7 mit der Anbaufläche 1.1 in Kontakt zu bringen und somit aufzukleben.

Der Maßstab 4 kann bereits während der Ausrichtung am Maßstabträger 7 befestigt sein, oder erst nach dem Aufkleben in die Nut 6 des Maßstabträgers 7 eingeschoben werden.

Die beschriebenen Maßnahmen können auch zum Ausrichten und Montieren eines Maßstabes 4 selbst Verwendung finden. Der Maßstab 4 kann dabei ein Stahlband, ein Stahlstreifen oder eine Glaslamelle sein.

Die Klebefolie 8 kann alternativ oder zusätzlich auf der Anbaufläche 1.1 vorgesehen sein. Anstelle der Klebefolie 8 kann auch eine andere Klebeschicht durchgehend oder unterbrochen vorgesehen sein.

## Patentansprüche

1. Verfahren zum gerichteten Anbringen eines Maßstabes (4) oder Maßstabträgers (7) eines Längenmeßsystems an eine Anbaufläche (1.1) eines ersten Körpers (1), zu dem ein zweiter Körper (2) relativ dazu in Meßrichtung (X) bewegbar angeordnet ist, wobei die Anbringung durch Klebung mittels eines Klebstoffes (8.2) erfolgt, **dadurch gekennzeichnet, daß**
- der Maßstab (4) oder Maßstabträger (7) über zumindest einen Abstandhalter (9) in Abstand zur Anbaufläche (1.1) unterstützt gehalten wird und in dieser Position durch Verschieben des Abstandhalters (9) auf der Anbaufläche (1.1) ausgerichtet wird, und daß
- die Unterstützung nach erfolgter Ausrichtung aufgehoben wird und der Maßstab (4) oder Maßstabträger (7) in Richtung der Anbaufläche (1.1) bewegt wird, um die Haltekraft des Klebstoffes (8.2) zwischen dem ausgerichteten Maßstab (4) und der Anbaufläche (1.1) oder dem ausgerichteten Maßstabträger (1.1) und der Anbaufläche (1.1) zur Wirkung zu bringen.

2. Verfahren nach Anspruch 1, **dadurch gekennzeichnet, daß** am zweiten Körper (2) ein Mittel (11) befestigt wird, mit dem eine Markierung (12, 13) parallel zur Meßrichtung (X) auf der Anbaufläche (1.1) aufgebracht wird, wobei der Maßstab (4) oder Maßstabträger (7) an dieser Markierung (12, 13) ausgerichtet wird.

3. Verfahren nach Anspruch 1, **dadurch gekennzeichnet, daß** am zweiten Körper (2) ein Anschlag (13, 14) befestigt wird, der zumindest eine Anschlagfläche aufweist, und daß der Maßstab (4), der Maßstabträger (7) oder der Abstandhalter (9) an dieser Anschlagfläche zum Ausrichten angelegt wird.

4. Verfahren nach Anspruch 3, **dadurch gekennzeichnet, daß** der Anschlag (14) eine spielfreie Führung bildet, die den Maßstab (4) oder den Maßstabträger (7) quer zur Meßrichtung (X) geführt ausrichtet.

5. Verfahren nach Anspruch 4, **dadurch gekennzeichnet, daß** der Anschlag (14) relativ zum Maßstab (4) oder Maßstabträger (7) in Meßrichtung (X) bewegt wird, und daß der Anschlag (14) während dieser Bewegung den zumindest einen Abstandhalter (9) relativ zum Maßstab (4) oder Maßstabträger (7) in Meßrichtung (X) verschiebt und somit die Unterstützung aufhebt.

6. Vorrichtung zum Anbringen eines Maßstabes (4) oder Maßstabträgers (7) eines Längenmeßsystems an eine Anbaufläche (1.1) eines ersten Körpers (1), zu dem ein zweiter Körper (2) relativ dazu in Meßrichtung (X) bewegbar angeordnet ist, wobei zwischen dem Maßstab (4) und der Anbaufläche (1.1) oder zwischen dem Maßstabträger (7) und der Anbaufläche (1.1) eine Klebeschicht (8.2) vorgesehen ist, **dadurch gekennzeichnet, daß**
- zumindest ein Abstandhalter (9) den Maßstab (4) oder den Maßstabträger (7) in Abstand und zum Ausrichten verschiebbar an der Anbaufläche (1.1) unterstützend hält, und daß
- der zumindest eine Abstandhalter (9) betätigbar ist, um die Unterstützung aufzuheben und die Haltekraft der Klebeschicht (8.2) zwischen dem Maßstab (4) und der Anbaufläche (1.1) oder dem Maßstabträger (7) und der Anbaufläche (1.1) zur Wirkung zu bringen.

7. Vorrichtung nach Anspruch 6, **dadurch gekennzeichnet, daß** die Klebeschicht (8.2) als Klebefolie (8) auf der Unterseite (7.1) des Maßstabes (4) oder Maßstabträgers (7) aufgebracht ist.

8. Vorrichtung nach Anspruch 6 oder Anspruch 7, **dadurch gekennzeichnet, daß** der Abstandhalter (9) eine Auflagefläche (10) aufweist, und daß der Maßstab (4) oder der Maßstabträger (7) an dieser Auflagefläche (10) in Abstand parallel zur Anbaufläche (1.1) gehalten ist.

9. Vorrichtung nach Anspruch 8, **dadurch gekennzeichnet, daß** der Abstandhalter (9) den Maßstab (4) oder den Maßstabträger (7) an den Längsseiten umgreift und eine spielfreie Parallelführung in Meßrichtung (X) verlaufend bildet.

10. Vorrichtung nach einem der Ansprüche 6 bis 9, **dadurch gekennzeichnet, daß** der Abstandhalter (9) über Magnetkraft an der Anbaufläche (1.1) gehalten ist.

## Claims

1. Method for the directed application of a scale (4) or scale carrier (7) of a length measuring system to a mounting surface (1.1) of a first body (1), in relation to which a second body (2) is arranged to be moveable in the measuring direction (X), the application taking place by gluing with an adhesive (8.2), **characterised in that**
- the scale (4) or scale carrier (7) is held spaced apart from the mounting surface (1.1) and supported by at least one spacer (9) and is aligned in this position by displacement of the spacer (9) on the mounting surface (1.1), and **in that**
- once the alignment has taken place, this support is removed and the scale (4) or scale carrier (7) is moved in the direction of the mounting surface (1.1) in order to make the holding force of the adhesive (8.2) effective between the aligned scale (4) and the mounting surface (1.1) or the aligned scale carrier (1.1) and the mounting surface (1.1).

2. Method according to claim 1, **characterised in that** there is fastened to the second body (2) a means (11) with which a marking (12, 13) is applied to the mounting surface (1.1) parallel to the measuring direction (X), the scale (4) or scale carrier (7) being aligned along this marking (12, 13).

3. Method according to claim 1, **characterised in that** a positioning element (13, 14) which has at least one positioning face is fastened to the second body (2), and **in that** the scale (4), the scale carrier (7) or the spacer (9) is placed against this positioning face for alignment.

4. Method according to claim 3, **characterised in that** the positioning element (14) forms a guide free of play which aligns the scale (4) or the scale carrier (7) guided transversely with respect to the measuring direction (X).

5. Method according to claim 4, **characterised in that** the positioning element (14) is moved relative to the scale (4) or scale carrier (7) in the measuring direction (X), and **in that** during this movement the positioning element (14) displaces the at least one spacer (9) in the measuring direction (X) relative to the scale (4) or scale carrier (7) and thus removes the support.

6. Device for applying a scale (4) or scale carrier (7) of a length measuring system to a mounting surface (1.1) of a first body (1), in relation to which a second body (2) is arranged to be moveable in the measuring direction (X), an adhesive layer (8.2) being provided between the scale (4) and the mounting surface (1.1) or between the scale carrier (7) and the mounting surface (1.1), **characterised in that**
- at least one spacer (9) holds the scale (4) or the scale carrier (7) and supports it at a distance and so that it is displaceable on the mounting surface (1.1) for alignment, and **in that**
- the at least one spacer (9) can be actuated to remove the support and make the holding force of the adhesive layer (8.2) effective between the scale (4) and the mounting surface (1.1) or the scale carrier (7) and the mounting surface (1.1).

7. Device according to claim 6, **characterised in that** the adhesive layer (8.2) has been applied as an adhesive foil to the underside (7.1) of the scale (4) or scale carrier (7).

8. Device according to claim 6 or claim 7, **characterised in that** the spacer (9) has a support surface (10), and **in that** the scale (4) or the scale carrier (7) is held on this support surface (10) at a distance and parallel to the mounting surface (1.1).

9. Device according to claim 8, **characterised in that** the spacer (9) engages round the scale (4) or the scale carrier (7) at the long sides and forms a parallel guide free of play in the measuring direction (X) .

10. Device according to one of claims 6 to 9, **characterised in that** the spacer (9) is held on the mounting surface (1.1) by magnetic force.

## Revendications

1. Procédé et dispositif pour réaliser le montage orienté d'une échelle de mesure (4) ou d'un support d'échelle de mesure (7) appartenant à un système de mesure de longueurs sur une surface de montage (1.1) d'un premier corps (1) par rapport auquel peut se déplacer un second corps (2) dans la direction de mesure (X), le montage étant assuré par collage au moyen d'un adhésif (8.2), **caractérisés en ce que**
- l'échelle de mesure (4) ou le support d'échelle de mesure (7) est maintenu en étant soutenu à distance de la surface de montage (1.1) par l'intermédiaire d'au moins un espaceur (9) et, dans cette position, il est orienté par glissement de l'espaceur (9) sur la surface de montage (1.1).
- le soutien, une fois l'orientation achevée, est retiré, et l'échelle de mesure (4) ou le support d'échelle de mesure (7) est déplacé en direction de la surface de montage (1.1) pour rendre effective la force de maintien de l'adhésif (8.2) entre l'échelle de mesure (4) orientée ou le support d'échelle de mesure (1.1) orienté et la surface de montage (1.1).

2. Procédé et dispositif selon la revendication 1, **caractérisés en ce que** sur le second corps (2) est fixé un moyen (11) par lequel est réalisé sur la surface de montage (1.1) un marquage (12, 13) parallèle à la direction de mesure (X), l'échelle de mesure (4) ou le support d'échelle de mesure (7) étant orienté selon ce marquage (12, 13).

3. Procédé et dispositif selon la revendication 1, **caractérisés en ce que** sur le second corps (2) est fixée une butée (13, 14) présentant au moins une portée de butée sur laquelle est appliqué, pour orientation, l'échelle de mesure (4), le support d'échelle de mesure (7) ou l'espaceur (9).

4. Procédé et dispositif selon la revendication 3, **caractérisés en ce que** la butée (14) constitue un guidage sans jeu qui oriente par guidage l'échelle de mesure (4) ou le support d'échelle de mesure (7) perpendiculairement à la direction de mesure (X).

5. Procédé et dispositif selon la revendication 4, **caractérisés en ce que** la butée (14) est déplacée par rapport à l'échelle de mesure (4) ou au support d'échelle de mesure (7) selon la direction de mesure (X), et pendant ce mouvement, elle déplace l'espaceur (9) au nombre d'un au moins par rapport à l'échelle de mesure (4) ou au support d'échelle de mesure (7) selon la direction de mesure (X), en faisant ainsi disparaître le soutien.

6. Dispositif pour installer une échelle de mesure (4) ou un support d'échelle de mesure (7) d'un système de mesure de longueurs sur une surface de montage (1.1) d'un premier corps (1) par rapport auquel peut se déplacer un second corps (2) dans la direction de mesure (X), une couche d'adhésif (8.2) étant prévue entre l'échelle de mesure (4) ou le support d'échelle de mesure (7) et la surface de montage (1.1), **caractérisé en ce que**
- au moins un espaceur (9) maintient avec soutien l'échelle de mesure (4) ou le support d'échelle de mesure (7) à distance et en pouvant coulisser pour orientation sur la surface de montage (1.1),
- l'espaceur (9) au nombre d'un au moins peut être actionné pour faire disparaître le soutien, et rendre active la force de maintien de la couche d'adhésif (8.2) entre l'échelle de mesure (4) ou le support d'échelle de mesure (7) et la surface de montage (1.1).

7. Dispositif selon la revendication 6, **caractérisé en ce que** la couche d'adhésif (8.2) est déposéé sous la forme d'une pellicule adhésive (8) sur la face inférieure (7.1) de l'échelle de mesure (4) ou du support d'échelle de mesure (7).

8. Dispositif selon la revendication 6 ou 7, **caractérisé en ce que** l'espaceur présente une portée de contact (10) sur laquelle l'échelle de mesure (4) ou le support d'échelle de mesure (7) est maintenu espacé de la surface de montage (1.1) et parallèlement à celle-ci.

9. Dispositif selon la revendication 8, **caractérisé en ce que** l'espaceur (9) est en prise avec l'échelle de mesure (4) ou le support d'échelle de mesure (7) sur les côtés longitudinaux de l'échelle ou du support, en formant un guidage parallèle sans jeu selon la direction de mesure (X).

10. Dispositif selon une des revendications 6 à 9, **caractérisé en ce que** l'espaceur (9) est maintenu sur la surface de montage (1.1) par une force magnétique.
